# EUROPÄISCHE PATENTANMELDUNG

(11) **EP 1 172 918 A2**
(43) Veröffentlichungstag der Anmeldung: **16.01.2002**
(21) Anmeldenummer: 01114154.6
(22) Anmeldetag: 11.06.2001
(51) Int. Cl.: H02K 3/12

(54) **Statorwicklung für eine elektrische Maschine**

(30) Priorität: 06.07.2000 DE 10033014
(71) Anmelder: Alstom (Switzerland) Ltd, 5401 Baden (CH)
(72) Erfinder: Joho, Reinhard, 5022 Rombach (CH)
(74) Vertreter: Liebe, Rainer

(57) **Zusammenfassung**

Bei einer Statorwicklung für eine elektrische Maschine, bei welcher Statorwicklung in den Wicklungsnuten (11) eines Statorblechkörpers (10) jeweils zwei Leiterstäbe (15, 17) zwischen dem Nutgrund (21) und der Bohrung (22) des Statorblechkörpers (10) übereinander angeordnet sind, wobei jeder der Leiterstäbe (15, 17) eine Mehrzahl von nebeneinanderliegenden Teilleitersäulen (15a,..,d bzw. 17a,b) bzw. Teilleiterebenen umfasst, werden bei begrenzten Wicklungsmehrkosten Wirbelstromverluste dadurch wirksam verringert, dass der bohrungsnahe Leiterstab (15) mehr Teilleitersäulen (15a,..,d) bzw. Teilleiterebenen aufweist als der nutgrundnahe Leiterstab (17).

## Beschreibung

### TECHNISCHES GEBIET

Die vorliegende Erfindung bezieht sich auf das Gebiet der elektrischen Maschinen. Sie betrifft eine Statorwicklung gemäss dem Oberbegriff des Anspruchs 1.

Eine solche Statorwicklung ist z.B. aus H. Sequenz: "Herstellung der Wicklung elektrischer Maschinen", S. 159, Springer-Verlag, 1973, bekannt.

### STAND DER TECHNIK

Es ist bekannt, in der Statorwicklung einer elektrischen Maschine hoher Leistung die Roebelstäbe einer Zweischichtwicklung (mit zwei übereinanderliegenden Leiterstäben pro Nut) als Doppel-Roebelstäbe mit vier nebeneinanderliegenden Teilleitersäulen oder Teilleiterebenen auszuführen. Dies wird seit Jahrzehnten insbesondere für wassergekühlte Wicklungen getan. Es lassen sich auf diese Weise die Anzahl der Leiterstäbe halbieren und damit die Wicklungskosten senken. Die Teilleiter bleiben etwa gleich breit wie beim Stator mit Einfach-Roebelstab. Die Wicklungsnuten werden damit nicht ganz doppelt so breit, weil Anteile an Hauptisolierung entfallen.

Bei indirekt gekühlten Wicklungen mit dem gasförmigen Kühlmedium Luft oder Wasserstoff wird die Verlustleistung der Leiter über die Stabisolierung abgeführt. Hier wird die Stabausführung als Doppel-Roebelstab erst seit wenigen Jahren ausgeführt (siehe z.B. die EP-A2-0 905 859). Der Grund liegt in den mit zunehmender Maschinenausnutzung stark steigenden Wirbelstrom-Zusatzverlusten im Leiter. Davon hauptsächlich betroffen sind die obersten Teilleiter des in der Wicklungsnut obenliegenden, bohrungsnahen Leiterstabes. Wegen der ungünstigen Verlustabfuhr erwärmen sich diese Teilleiter stark und beschränken über die Temperaturlimite der Isoliermaterialien die erzielbare Maschinenleistung. Eine Halbierung der Teilleiterbreite durch einen Uebergang vom Einfach-Roebelstab zum Doppel-Roebelstab oder 4-Ebenen-Roebelstab bringt eine starke Verminderung dieser Wirbelstromverluste (bis etwa Faktor 4). In zweiter Linie lassen sich mit dem Doppel-Roebelstab auch Zusatzverluste im Wickelkopf einsparen, welche auch hier, allerdings in abgeschwächter Form, im bohrungsnahen Leiterstab stärker auftreten.

Nachteilig ist jedoch, dass bei indirekt gekühlten Wicklungen mit der globalen Einführung des Doppel-Roebelstabes die Wicklungskosten stark ansteigen, weil die Anzahl der Leiterstäbe gegenüber der Lösung mit Einfach-Roebelstäben gleich bleibt.

### DARSTELLUNG DER ERFINDUNG

Es ist daher Aufgabe der Erfindung, eine Statorwicklung zu schaffen, welche bei reduziertem Mehraufwand das Problem der Wirbelstromverluste im bohrungsnahen Bereich der Leiterstäbe löst.

Die Aufgabe wird durch die Gesamtheit der Merkmale des Anspruchs 1 gelöst. Der Kern der Erfindung besteht darin, die Wirbelstromverluste reduzierende weitergehende Unterteilung der Teilleiter nur im bohrungsnahen Leiterstab vorzunehmen, während der von den Wirbelstromverlusten nicht so betroffene nutgrundnahe Leiterstab weniger stark unterteilt ist. Auf diese Weise wird die Anzahl der Teilleiter nur dort erhöht, wo es notwendig ist, so dass die Mehrkosten für die Wicklung beschränkt werden.

Eine bevorzugte Ausgestaltung der Erfindung zeichnet sich dadurch aus, dass der nutgrundnahe Leiterstab als Einfach-Roebelstab mit zwei Teilleitersäulen bzw. Teilleiterebenen ausgebildet ist, und dass der bohrungsnahe Leiterstab als Doppel-Roebelstab mit vier Teilleitersäulen bzw. Teilleiterebenen ausgebildet ist. Hierdurch ist es möglich, im Rahmen der Erfindung bewährte Methoden des Leiterstabaufbaus einzusetzen.

Besonders einfach werden Aufbau, Fertigung und Einbau der Leiterstäbe, wenn die wirksame Gesamtbreite der Teilleitersäulen in beiden Leiterstäben in etwa gleich ist, und wenn die wirksamen Höhen der Teilleitersäulen der beiden Leiterstäbe gleich sind.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einem auf eine Wicklungsnut beschränkten Ausschnitt einen Querschnitt durch eine Statorwicklung gemäss einem bevorzugten Ausführungsbeispiel der Erfindung;
- Fig. 2: ein erstes Ausführungsbeispiel für eine Verbindung der Stabenden bei einer Wicklung gemäss Fig. 1; und
- Fig. 3: ein zweites Ausführungsbeispiel für eine Verbindung der Stabenden bei einer Wicklung gemäss Fig. 1.

### WEGE ZUR AUSFÜHRUNG DER ERFINDUNG

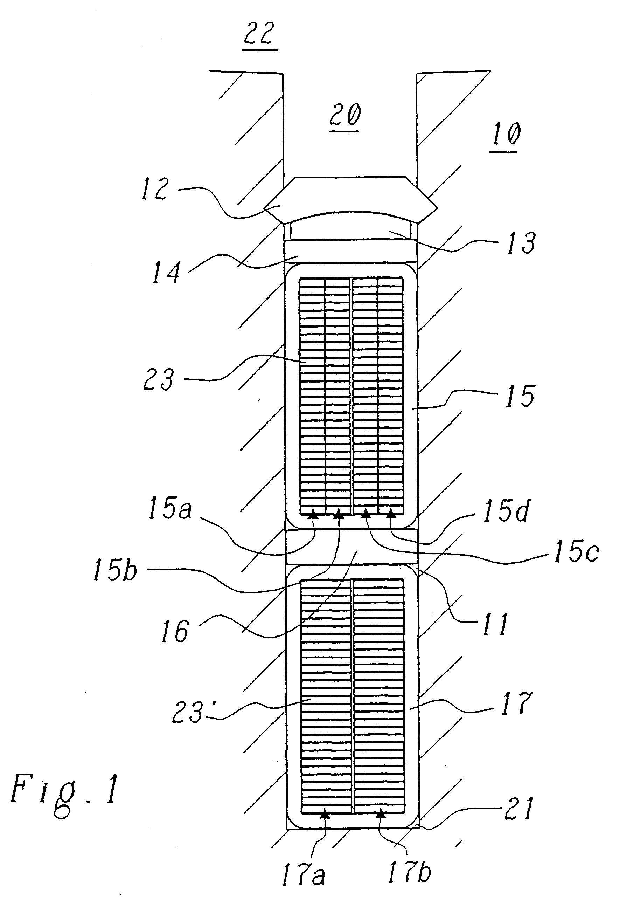

In Fig. 1 ist in einem auf eine Wicklungsnut beschränkten Ausschnitt ein Querschnitt durch eine Statorwicklung gemäss einem bevorzugten Ausführungsbeispiel der Erfindung dargestellt. Die Statorwicklung ist in einem Statorblechkörper 10 untergebracht und setzt sich aus einzelnen Leiterstäben 15, 17 zusammen, die jeweils in einer Wicklungsnut 11 untergebracht sind. Die Wicklungsnut 11 ist zur zentralen Bohrung 22 des Statorblechkörpers 10 hin offen und wird auf der gegenüberliegenden Seite durch einen Nutgrund 21 begrenzt. In der Wicklungsnut 11 sind zwei Leiterstäbe 17 und 15 übereinander angeordnet. Dementsprechend ist der Leiterstab 17 der nutgrundnahe Leiterstab, während der Leiterstab 15 der bohrungsnahe Leiterstab ist. Die Leiterstäbe 15, 17 sind aus einer Vielzahl von einzelnen Teilleitern 23 bzw. 23' aufgebaut, aus denen durch Uebereinanderstapeln jeweils mehrere nebeneinander angeordnete Teilleitersäulen 15a,..,d bzw. 17a,b gebildet werden. Die Teilleitersäulen bilden bei der Transponierung der Teilleiter 23, 23' im Rahmen einer Roebelanordnung oder auf eine andere Weise zugleich Teilleiterebenen. Die Isolierung der Leiterstäbe 15, 17 erfolgt mit bekannten Methoden, auf die hier nicht weiter eingegangen wird.

Die beiden Leiterstäbe 15 und 17 sind voneinander durch eine Zwischenlage 16 getrennt. Sie werden in der Wicklungsnut 11 mittels einer Nutverschlussanordnung gehalten, die in an sich bekannter Weise einen Nutverschlusskeil 12, einen Unterkeil 13 und eine Keilbeilage 14 umfasst. Die Höhe der oberhalb des Nutverschlusskeiles 12 verbleibenden Vornut 20 ist gegeben durch zum Teil gegenläufige Forderungen, wie Kompaktheit, Reaktanzen und Stab-Zusatzverluste.

Der bohrungsnahe Leiterstab 15 umfasst im dargestellten Beispiel vier Teilleitersäulen bzw. -ebenen 15a,..,d, der nutgrundnahe Leiterstab 17 dagegen nur zwei Teilleitersäulen bzw. -ebenen (17a,b). Die Teilleiter 23 des bohrungsnahen Leiterstabes 15 haben in etwa die halbe Breite der Teilleiter 23' des nutgrundnahen Leiterstabes 17, so dass sich für beide Leiterstäbe 15, 17 in etwa dieselbe (elektrisch) wirksame Gesamtbreite ergibt. Bevorzugt sind auch die wirksamen Höhen der beiden Leiterstäbe 15 und 17 gleich. Wird jedoch mehr Wert auf einen Ausgleich der Stabverluste und weniger Wert auf die Beschränkung der Wicklungsmehrkosten gelegt, kann die wirksame Höhe des bohrungsnahen Leiterstabes 15 zu Lasten des nutgrundnahen Leiterstabes 17 vergrössert werden. Darüber hinaus kann auch die Dicke der Teilleiter im nutgrundnahen Leiterstab 17 grösser gewählt werden.

Die Verdoppelung der Anzahl der Teilleiter 23 nur im bohrungsnahen Leiterstab 15 reduziert die Stabmehrkosten gegenüber einer Verdoppelung in beiden Stäben in etwa auf die Hälfte. Die Teilleitersäulen 15a,..,d im bohrungsnahen Leiterstab 15 können beispielsweise als Doppel-Roebelstab zusammengefasst sein, wobei jeweils die Teilleiter 23 zweier benachbarter Teilleitersäulen 15a,b und 15c,d miteinander transponiert werden. Es ist aber auch denkbar, die Teilleiter 23 aller Teilleitersäulen 15a,..,d innerhalb eines 4-Ebenen-Roebelstabes untereinander zu transponieren. Die Teilleiter 23' der Teilleitersäulen 17a,b des nutgrundnahen Leiterstabes 17 sind vorzugsweise in Form eines Einfach-Roebelstabes untereinander transponiert.

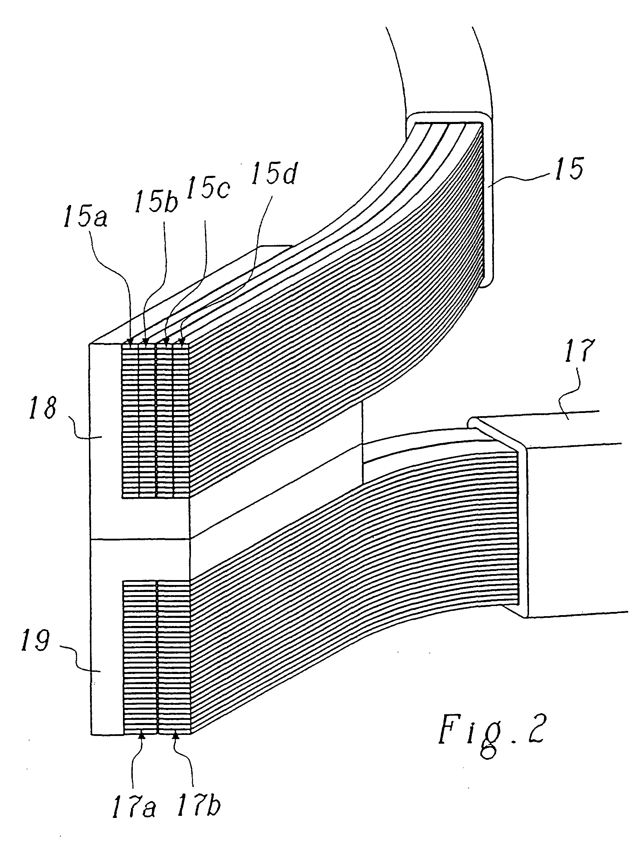

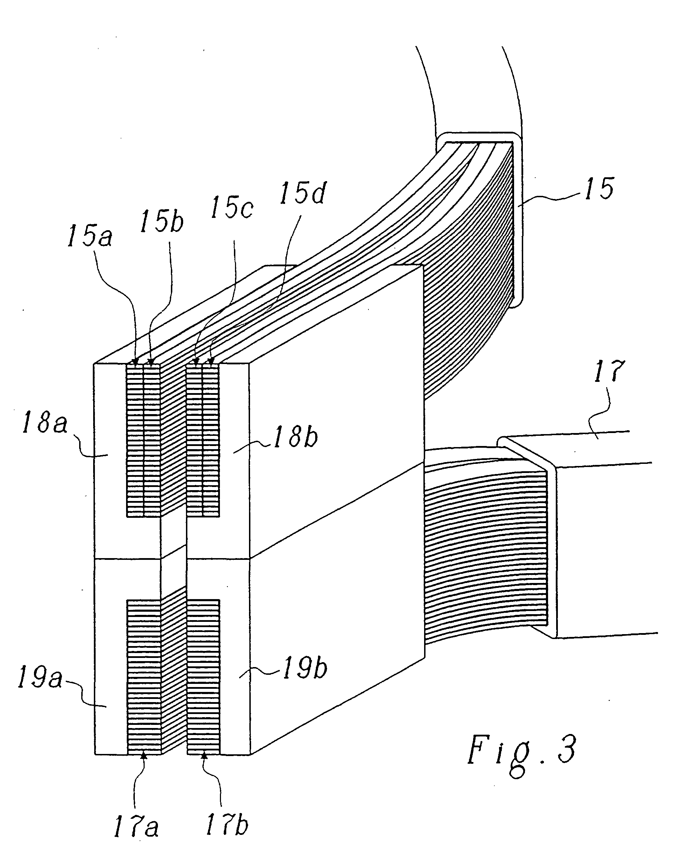

Die Verbindung des bohrungsnahen 4-Ebenen-Leiterstabes 15 mit dem korrespondierenden nutgrundnahen als Einfach-Roebelstab ausgeführten Leiterstabes 17 am Stabende kann gemäss Fig. 2 und 3 auf zwei Arten erfolgen:

Sind die Teilleiter 23 aller Teilleitersäulen 15a,..,d des bohrungsnahen Leiterstabes 15 miteinander transponiert, wie dies z.B. bei in sich kompensierten Doppel-Roebelstäben, z.B. in Form sogenannter "Zopfstäbe", der Fall ist, können alle Teilleitersäulen 15a,..,d und 17a,b gemäss Fig. 2 in einer massiven Verbindung mittels zweier Oesen 18, 19 an den Stabenden verbunden werden.

Es ist aber auch möglich, gemäss Fig. 3 eine aufgeteilte (gesplittete) Verbindung mittels zweier Paare von Oesen 18a, 19a und 18b, 19b vorzunehmen, wobei jeweils zwei Teilleitersäulen 15a,b bzw. 15c,d des bohrungsnahen Leiterstabes 15 mit der korrespondierenden Teilleitersäule 17a bzw. 17b des nutgrundnahen Leiterstabes 17 verbunden werden.

### BEZUGSZEICHENLISTE

- 10: Statorblechkörper
- 11: Wicklungsnut
- 12: Nutverschlusskeil
- 13: Unterkeil
- 14: Keilbeilage
- 15: Leiterstab (bohrungsnah)
- 15a,..,d: Teilleitersäule
- 16: Zwischenlage
- 17: Leiterstab (nutgrundnah)
- 17a,b: Teilleitersäule
- 18, 18a,b: Oese
- 19, 19a,b: Oese
- 20: Vornut
- 21: Nutgrund (Wicklungsnut)
- 22: Bohrung
- 23, 23': Teilleiter

## Patentansprüche

1. Statorwicklung für eine elektrische Maschine, bei welcher Statorwicklung in den Wicklungsnuten (11) eines Statorblechkörpers (10) jeweils zwei Leiterstäbe (15, 17) zwischen dem Nutgrund (21) und der Bohrung (22) des Statorblechkörpers (10) übereinander angeordnet sind, wobei jeder der Leiterstäbe (15, 17) eine Mehrzahl von nebeneinanderliegenden Teilleitersäulen (15a,..,d bzw. 17a,b) bzw. Teilleiterebenen umfasst, **dadurch gekennzeichnet, dass** der bohrungsnahe Leiterstab (15) mehr Teilleitersäulen (15a,..,d) bzw. Teilleiterebenen aufweist als der nutgrundnahe Leiterstab (17).

2. Statorwicklung nach Anspruch 1, **dadurch gekennzeichnet, dass** der nutgrundnahe Leiterstab (17) als Einfach-Roebelstab mit zwei Teilleitersäulen (17a,b) bzw. Teilleiterebenen ausgebildet ist, und dass der bohrungsnahe Leiterstab (15) drei oder mehr Teilleitersäulen (15a,..,d) aufweist.

3. Statorwicklung nach Anspruch 2, **dadurch gekennzeichnet, dass** der bohrungsnahen Leiterstab (15) als Doppel-Roebelstab mit vier Teilleitersäulen (15a,..,d) bzw. Teilleiterebenen ausgebildet ist.

4. Statorwicklung nach einem der Ansprüche 1 bis 3, **dadurch gekennzeichnet, dass** die wirksame Gesamtbreite der Teilleitersäulen (15a,..,d bzw. 17a,b) in beiden Leiterstäben (15, 17) in etwa gleich ist.

5. Statorwicklung nach Anspruch 4, **dadurch gekennzeichnet, dass** die wirksame Höhe der Teilleitersäulen (15a,..,d) der bohrungsnahen Leiterstäbe (15) mindestens so gross ist wie die wirksame Höhe der Teilleitersäulen (17a,b) der nutgrundnahen Leiterstäbe (17).

6. Statorwicklung nach Anspruch 5, **dadurch gekennzeichnet, dass** die wirksamen Höhen der Teilleitersäulen (15a,..,d; 17a,b) der beiden Leiterstäbe (15, 17) gleich sind.

7. Statorwicklung nach einem der Ansprüche 1 bis 6, **dadurch gekennzeichnet, dass** korrespondierende Leiterstäbe (15, 17) an den Stabenden verbunden sind, und dass die Verbindung (18, 19) für alle Teilleitersäulen (15a,..,d; 17a,b) gemeinsam erfolgt.

8. Statorwicklung nach Anspruch 3, **dadurch gekennzeichnet, dass** korrespondierende Leiterstäbe (15, 17) an den Stabenden verbunden sind, und dass die Verbindung (18a, 19a; 18b, 19b) getrennt für korrespondierende Teilleitersäulen (15a,b; 17a bzw. 15c,d; 17b) der beiden Leiterstäbe (15, 17) erfolgt.
